# EUROPÄISCHE PATENTSCHRIFT

(11) **EP 3 766 324 B1**
(45) Veröffentlichungstag und Bekanntmachung des Hinweises auf die Patenterteilung: **21.08.2024**
(21) Anmeldenummer: 20162269.3
(22) Anmeldetag: 11.03.2020
(51) Int. Cl.: G05D 1/00

(54) **VERFAHREN ZUR ABARBEITUNG EINES LANDWIRTSCHAFTLICHEN ARBEITSPROZESSES AUF EINEM FELD**
METHOD FOR EXECUTING AN AGRICULTURAL WORKING PROCESS ON A FIELD
PROCÉDÉ D'EXÉCUTION D'UN PROCESSUS DE TRAVAIL AGRICOLE SUR UN CHAMP

(30) Priorität: 15.07.2019 DE 102019119110
(43) Veröffentlichungstag der Anmeldung: 20.01.2021
(73) Patentinhaber: CLAAS Selbstfahrende Erntemaschinen GmbH, 33428 Harsewinkel (DE)
(72) Erfinder: Bormann, Bastian, 33334 Gütersloh (DE); Baumgarten, Joachim, 48361 Beelen (DE); Neitemeier, Dennis, 59510 Lippetal (DE); Wilken, Andreas, 49143 Bissendorf (DE)
(74) Vertreter: CLAAS Gruppe

(56) Entgegenhaltungen:
- EP-A1- 3 139 235
- EP-A1- 3 400 774
- EP-A2- 1 692 928
- EP-A2- 2 110 012
- DE-A1- 4 322 293
- US-A1- 2015 302 305

## Beschreibung

Die Erfindung betrifft ein Verfahren zur Abarbeitung eines landwirtschaftlichen Arbeitsprozesses auf einem Feld mittels eines Verbunds aus landwirtschaftlichen Arbeitsmaschinen gemäß dem Oberbegriff von Anspruch 1.

Bei landwirtschaftlichen Arbeitsprozessen auf Feldern mit großen Ausdehnungen kommt oft ein Verbund aus landwirtschaftlichen Arbeitsmaschinen zur Anwendung. Hier ist der optimale Betrieb jeder Arbeitsmaschine des Verbunds von besonderer Bedeutung, um die Effizienz des Arbeitsprozesses insgesamt zu maximieren. Dies betrifft insbesondere die Arbeitsaggregate der Arbeitsmaschinen. Diese Arbeitsaggregate lassen sich zur Anpassung an die jeweiligen landwirtschaftlichen Bedingungen mit Maschinenparametern einstellen. Der Optimierung der Maschinenparameter kommt im Hinblick auf die angesprochene Effizienz des Arbeitsprozesses besondere Bedeutung zu.

Das bekannte Verfahren (EP 3 400 774 A1), von dem die Erfindung ausgeht, betrifft die Abarbeitung eines landwirtschaftlichen Arbeitsprozesses auf einem Feld mittels eines Verbunds aus landwirtschaftlichen Arbeitsmaschinen, die über ein drahtloses Datennetzwerk miteinander kommunizieren. Dabei ist vorgesehen, dass eine Master-Arbeitsmaschine selbstoptimierend ausgestaltet ist, optimierte Maschinenparameter erzeugt und diese über das drahtlose Datennetzwerk Slave-Arbeitsmaschinen zur Verfügung stellt. Die nicht selbstoptimierenden Slave-Arbeitsmaschinen übernehmen die optimierten Maschinenparameter unbesehen. Somit steuert im Grunde eine einzige Arbeitsmaschine den gesamten Verbund. Im Zuge der fortschreitenden Technologisierung weisen jedoch immer mehr landwirtschaftliche Arbeitsmaschinen Fahrerassistenzsysteme auf, mittels derer sie optimierte Maschinenparameter für ihre eigenen Arbeitsaggregate erzeugen können. Während das Master-Slave-System für Arbeitsmaschinen mit einer klaren Hardware-Hierarchie zu Effizienzgewinnen führt, besteht bei Verbünden aus landwirtschaftlichen Arbeitsmaschinen, die alle selbstoptimierend ausgestaltet sind, noch Potential. Insbesondere ist das Master-Slave-System für derartige Verbünde nicht flexibel genug.

Die nachveröffentlichte deutsche Patentanmeldung DE 10 2018 113 327.8 offenbart ein Verfahren zur übergeordneten Flottensteuerung eines Verbunds aus landwirtschaftlichen Arbeitsmaschinen nach Art einer Top-Down-Steuerung. Dort wird ausgehend von einer Gesamtplanung jeder Arbeitsmaschine eine Aufgabe zugewiesen, die diese selbstständig bearbeitet. EP 2 110 012 offenbart ein Verfahren zur Steuerung einer virtuellen Arbeitsmaschine mit Selbstoptimierung.

Der Erfindung liegt das Problem zu Grunde, das bekannte Verfahren derart auszugestalten und weiter zu bilden, dass die Abarbeitung landwirtschaftlicher Arbeitsprozesse bei Verbünden selbstoptimierender Arbeitsmaschinen flexibler und effizienter gestaltet wird.

Das obige Problem wird bei einem Verfahren gemäß dem Oberbegriff von Anspruch 1 durch die Merkmale des kennzeichnenden Teils von Anspruch 1 gelöst. Wesentlich ist die grundsätzliche Erkenntnis, dass starre Hierarchien in einem Verbund landwirtschaftlicher Arbeitsmaschinen durch dynamische Hierarchien ersetzt werden können. Wenn die Arbeitsmaschinen des Verbunds gemeinsam nach Art einer virtuellen Arbeitsmaschine zusammenarbeiten, wird es möglich, den gesamten landwirtschaftlichen Arbeitsprozess als solchen flexibel zu optimieren. Bei der Optimierung einer einzelnen selbstoptimierenden Arbeitsmaschine ist es bisher so, dass eine Gesamtoptimierung unter der Berücksichtigung aller Einflussfaktoren inklusive aller Zusammenhänge auf Grund der sehr hohen Komplexität gar nicht möglich ist. Stattdessen werden Subsysteme, beispielsweise einzelne Arbeitsaggregate, der selbstoptimierenden Arbeitsmaschine einzeln optimiert und diese Optimierungsergebnisse werden im Rahmen einer Gesamtstrategie zusammengeführt. Je nach Gesamtstrategie haben dabei einzelne Subsysteme in gewissen Bereichen Vorrang vor anderen Subsystemen und dürfen diesen, auf Basis ihrer eigenen Optimierungsergebnisse, Vorgaben machen. Diese anderen Subsysteme passen ihre eigenen Optimierungen dann wiederum an diese Vorgaben an. So wird im Rahmen eines stetigen und dynamischen Austausches, der abhängig vom Gesamtziel jederzeit veränderbar ist, die gesamte Arbeitsmaschine optimiert. Genau dieses Prinzip wird nun auf den Verbund aus landwirtschaftlichen Arbeitsmaschinen übertragen. Essentiell für die Zusammenarbeit nach Art einer virtuellen Arbeitsmaschine ist somit, dass Ergebnisse der Optimierung einzelner Arbeitsma schinen wieder in den Verbund einfließen und dort ihrerseits von anderen Arbeitsmaschinen genutzt und insbesondere weiter optimiert werden. Zur Koordination des Verbunds und seiner Zusammenarbeit wird erfindungsgemäß ein Flotten-Prozess-Supervisor vorgesehen, der unter anderem Optimierungsaufgaben an die Arbeitsmaschinen verteilt. Weiter erfindungsgemäß, um die Arbeitsmaschinen des Verbunds aufeinander einzustellen, wird zu Beginn der Abarbeitung des landwirtschaftlichen Arbeitsprozesses eine Synchronisationsroutine durchgeführt.

Bei den Ausführungsformen gemäß Anspruch 2 arbeiten die landwirtschaftlichen Arbeitsmaschinen bei dem Sammeln von Sensordaten zusammen und können so ihre optimierten Maschinenparameter auf Basis einer gemeinsamen Sensordatenbasis erzeugen. So können einerseits auf den Verbund betrachtet Sensoren eingespart werden oder andererseits kann eine deutlich größere Menge an Sensordaten in die Optimierung einfließen.

Gemäß Anspruch 3 kann vorgesehen sein, dass gleichartige Arbeitsaggregate der Arbeitsmaschinen des Verbunds, beispielsweise alle Dreschwerke, zu einem virtuellen Arbeitsaggregat, beispielsweise einem virtuellen Dreschwerk, zusammengefasst werden und dass optimierte Maschinenparameter für dieses virtuelle Arbeitsaggregat ermittelt werden.

Bei der Ausgestaltung gemäß Anspruch 4 wird die Zusammenarbeit umgesetzt, indem mehrere Arbeitsmaschinen des Verbunds untereinander optimierte Maschinenparameter austauschen. Dabei kann vorgesehen sein, dass nicht jede Arbeitsmaschine alle ihre Arbeitsaggregate optimiert, sondern teilweise Optimierungen anderer Arbeitsmaschinen übernimmt. Somit ist es auch möglich, die Optimierung des gesamten Verbunds auf die Arbeitsmaschinen aufzuteilen und die vorhandene Hardware in Form von Fahrerassistenzsystemen vollständig auszunutzen, ohne nahezu identische Tätigkeiten redundant ausführen zu müssen.

Die Arbeitsmaschinen des Verbunds können auch teilweise autark arbeiten und dabei eine gemeinsame Datenbasis verwenden, eine Alternative gemäß Anspruch 5, die gerade bei weniger homogenen Feldbedingungen deutlich flexibler ist.

In einer bevorzugten Ausführungsform gemäß Anspruch 6 erzeugen die Arbeitsmaschinen ihre optimierten Maschinenparameter auf Basis von Feldbedingungen. Da diese Feldbedingungen vorzugsweise während der Abarbeitung des landwirtschaftlichen Arbeitsprozesses, oder zumindest kurz vorher, gemessen werden müssen, arbeiten die Arbeitsmaschinen vorzugsweise auch bei diesen Messungen zusammen, um die besagten Feldbedingungen so schneller einlernen zu können.

Anspruch 7 gibt eine weitere Möglichkeit an, wie die Arbeitsmaschinen des Verbunds zusammenarbeiten können.

Zur Koordination des Verbunds und seiner Zusammenarbeit wird erfindungsgemäß ein Flotten-Prozess-Supervisor vorgesehen der unter anderem Optimierungsaufgaben an die Arbeitsmaschinen verteilen kann. Eine derartige Koordination führt zu einer verbesserten Erntequalität und/oder Ernteleistung, da übergeordnete Strategien besser berücksichtigt werden können.

Erfindungsgemäß um die Arbeitsmaschinen des Verbunds aufeinander einzustellen, wird zu Beginn der Abarbeitung des landwirtschaftlichen Arbeitsprozesses eine Synchronisationsroutine vorgesehen. Vor der Synchronisationsroutine oder allgemein vor Beginn der Abarbeitung des landwirtschaftlichen Arbeitsprozesses kann auch eine Vorverarbeitungsroutine vorgesehen sein, die vorzugsweise auf einem Back-End-Computer extern zu dem Verbund durchgeführt wird. Diese Vorverarbeitungsroutine kann dazu dienen, Korrekturfaktoren zu ermitteln, um beispielsweise Unterschiede zwischen den Arbeitsmaschinen des Verbunds während der Abarbeitung des Arbeitsprozesses ignorieren zu können bzw. deren Einflüsse abzumildern. Diese Vorverarbeitungsroutine ist Gegenstand von Anspruch 8.

Bei der Ausgestaltung gemäß Anspruch 9 können die Korrekturfaktoren während der Abarbeitung des landwirtschaftlichen Arbeitsprozesses angepasst werden, um so eine laufende Verbesserung der Abarbeitung des Arbeitsprozesses zu erreichen.

Die Ausgestaltung gemäß Anspruch 10 betrifft eine Möglichkeit, die Korrekturfaktoren zu ermitteln.

Die besonders bevorzugten Ausgestaltungen gemäß der Ansprüche 11 und 12 betreffen die Möglichkeit, im Verbund Sensoren durch Daten anderer Sensoren zu kalibrieren oder gar einen Sensorausfall zu kompensieren. Durch die enge Zusammenarbeit der Arbeitsmaschinen kann ein derartiger Sensorausfall mittels der Sensordaten einer anderen Arbeitsmaschine zumindest teilweise kompensiert werden.

Um gleichartige Berechnungen nicht bei jedem Verbund durchführen zu müssen, kann gemäß Anspruch 13 vorgesehen sein, dass analog anwendbare Daten eines anderen Verbundes verwendet werden, die dann vorzugsweise nur noch angepasst werden müssen.

Da auch auf einem einzigen Feld zum Teil sehr unterschiedliche Feldbedingungen herrschen können, beispielsweise das Korn in einer Senke deutlich feuchter sein kann, als das Korn auf dem restlichen Feld, ist gemäß Anspruch 14 vorgesehen, dass ein Beitrag einer Arbeitsmaschine zur virtuellen Arbeitsmaschine durch einen Benutzer pausiert werden kann. Bei der Ausgestaltung gemäß Anspruch 15 weist der Verbund eine Qualitätssicherung auf, die diese Aufgabe übernehmen kann. So kann sichergestellt werden, dass die anderen Arbeitsmaschinen des Verbunds nicht durch unpassende Daten beeinflusst werden.

Die Ausführungsform gemäß Anspruch 16 betrifft ganz allgemein die Möglichkeit, dass ein Benutzer in den landwirtschaftlichen Prozess steuernd und/oder überprüfend eingreift.

Bei den besonders bevorzugten Ausgestaltungen nach Anspruch 17 sind die Arbeitsmaschinen des Verbunds landwirtschaftliche Arbeitsmaschinen desselben Typs, oder unterschiedliche Arbeitsmaschinen, die jedoch gemeinsam denselben landwirtschaftlichen Arbeitsprozess abarbeiten. Auf Grund dieser Gemeinsamkeiten lässt sich die Optimierung der Arbeitsmaschinen mittels der virtuellen Arbeitsmaschine besonders effektiv umsetzen, da gleichartige Arbeitsmaschinen oder gleichartige Arbeitsprozesse häufig bei vielen Maschinen gleichartige Optimierungsprozesse benötigen. Um die gesamte Komplexität landwirtschaftlicher Arbeitsprozesse abzubilden, ist gemäß Anspruch 18 vorgesehen, dass die Arbeitsmaschinen des Verbunds mit mindestens einem weiteren Verbund zusammenarbeiten können. Die Verbünde können wiederum nach Art einer virtuellen Arbeitsmaschine zusammenarbeiten.

Im Folgenden wird die Erfindung anhand einer lediglich ein Ausführungsbeispiel darstellenden Zeichnung näher erläutert. In der Zeichnung zeigt
- Fig. 1: einen Verbund landwirtschaftlicher Arbeitsmaschinen bei der Abarbeitung des vorschlagsgemäßen Verfahrens auf einem Feld mit verschiedenen Feldregionen und
- Fig. 2: ein Beispiel einer landwirtschaftlichen Arbeitsmaschine.

Die vorschlagsgemäße Lösung betrifft ein Verfahren zur Abarbeitung eines landwirtschaftlichen Arbeitsprozesses auf einem Feld 1 mittels eines Verbunds 2 aus landwirtschaftlichen Arbeitsmaschinen 3. Der Begriff "Verbund" bezieht sich dabei auf mehrere landwirtschaftliche Arbeitsmaschinen 3, die zur Abarbeitung des landwirtschaftlichen Arbeitsprozesses im weitesten Sinne zusammenarbeiten.

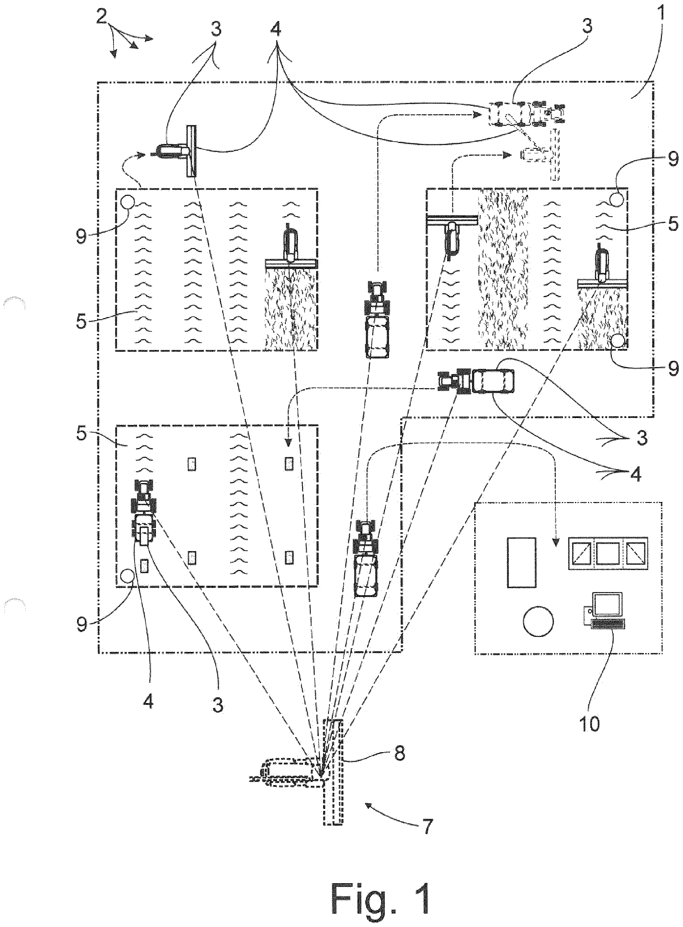

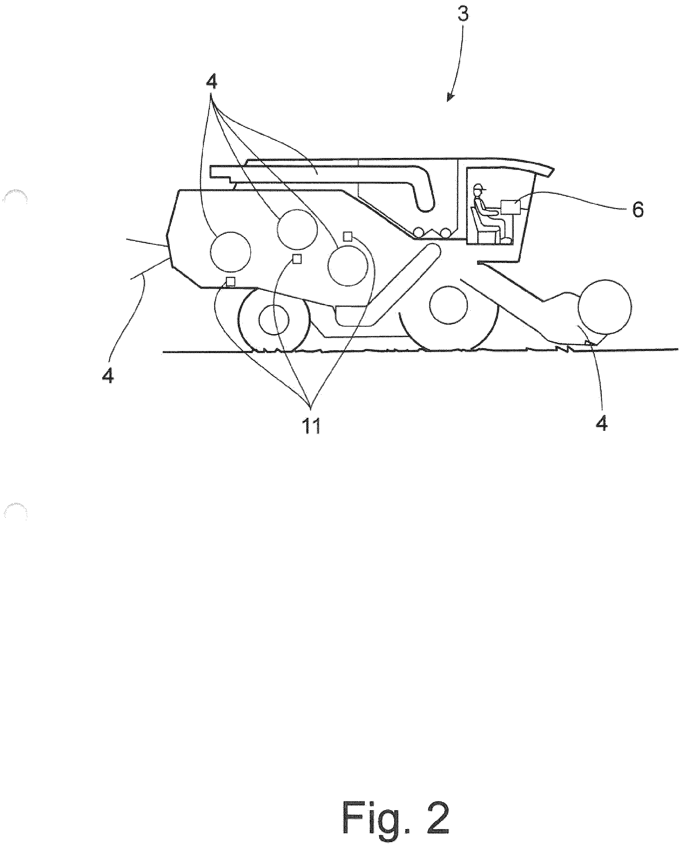

Die Arbeitsmaschinen 3 des Verbunds 2 weisen jeweils Arbeitsaggregate 4 auf. Die Arbeitsaggregate 4 dienen insbesondere der Abarbeitung eines Ernteprozesses und dabei vorzugsweise direkt der Erntegutverarbeitung. Die Arbeitsaggregate 4 sind zur Anpassung an die jeweiligen landwirtschaftlichen Bedingungen, beispielsweise Art und Zustand der Früchte auf dem Feld 1, mit Maschinenparametern einstellbar. In Fig. 1 ist ein derartiger Verbund 2 gezeigt, mittels dessen ein landwirtschaftlicher Arbeitsprozess auf einem Feld 1 abgearbeitet wird. Das Feld 1 ist hierbei in mehrere Feldzonen 5 unterteilt, die jeweils unterschiedliche Feldbedingungen aufweist. Um die noch zu erläuternde Zusammenarbeit der landwirtschaftlichen Arbeitsmaschinen 3 des Verbunds 2 zu ermöglichen, kommunizieren die Arbeitsmaschinen 3 des Verbunds 2 über ein drahtloses Netzwerk miteinander. Eine solche Arbeitsmaschine 3 ist beispielhaft in Fig. 2 dargestellt.

Die Arbeitsmaschinen 3 des Verbunds 2 sind als selbstoptimierende Arbeitsmaschinen 3 ausgestattet. Dafür weisen die Arbeitsmaschinen 3 je ein Fahrerassistenzsystem 6 zur automatisierten Erzeugung und Einstellung von hinsichtlich der landwirtschaftlichen Bedingungen optimierten Maschinenparameter auf. Da die Effizienz der Abarbeitung eines landwirtschaftlichen Arbeitsprozesses sehr stark von den Einstellungen der Arbeitsaggregate abhängt, kommt derartigen selbstoptimierenden Arbeitsmaschinen 3 immer höhere Bedeutung zu.

Wesentlich ist nun, dass die Arbeitsmaschinen 3 des Verbunds 2 gemeinsam nach Art einer virtuellen Arbeitsmaschine 7 zusammenarbeiten. Dabei ist essentiell, dass die Ergebnisse der Selbstoptimierung insbesondere in Form der optimierten Maschinenparameter mehrerer der Arbeitsmaschinen 3 des Verbunds 2 wieder in den Verbund 2 zurückfließen, um dort von anderen Arbeitsmaschinen 3 des Verbunds 2 weiter verwendet zu werden. Es ist dabei vorzugsweise so, dass der Verbund 2 dynamische Hierarchien aufweist, die sich abhängig von der jeweiligen Aufgabe des Verbunds 2 und/oder der Arbeitsmaschinen 3 ändern. Dies ist als Abkehr von den bisherigen Master-Slave-Hierarchien zu verstehen. Es ist dabei jedoch nicht ausgeschlossen, dass dem Verbund auch noch weitere, nicht selbstoptimierende Arbeitsmaschinen untergeordnet sind oder mit dem Verbund kooperieren, indem sie auch zur Abarbeitung des landwirtschaftlichen Arbeitsprozesses beitragen. Diese sind jedoch nicht Teil des Verbunds im Sinne der vorschlagsgemäßen Lehre.

Es ist hier und vorzugsweise so, dass die Arbeitsmaschinen 3 des Verbunds 2 Sensordaten generieren und dass mehrere der Arbeitsmaschinen 3 des Verbunds 2 Sensordaten anderer Arbeitsmaschinen 3 des Verbunds 2 bei der Erzeugung ihrer jeweiligen optimierten Maschinenparamater berücksichtigen. Da eine einzelne Arbeitsmaschine 3 des Verbunds 2 alleine jeweils nur Sensordaten eines kleinen Teils des Felds 1 sammeln kann, aus denen sich schwerlich auf Gesamtbedingungen oder größere Zusammenhänge schließen lässt, liegt der Vorteil dieses Austausches von Sensordaten auf der Hand.

Ganz im Sinne der vorschlagsgemäßen Zusammenarbeit der Arbeitsmaschinen 3 des Verbunds 2 muss es jedoch nicht bei einem einfachen Austausch bleiben. Es kann zusätzlich oder alternativ vorgesehen sein, dass die Arbeitsmaschinen 3 des Verbunds 2 gemeinsam Sensordaten sammeln und diese zu virtuellen Sensordaten aggregiert werden. Der Begriff "aggregiert" bezieht sich dabei prinzipiell nur darauf, dass die Sensordaten zusammengeführt werden. Vorzugsweise werden die Sensordaten jedoch in einer Aggregationsroutine verarbeitet. So kann insbesondere ein gemeinsames Kennfeld erzeugt werden, mittels dessen landwirtschaftliche Bedingungen insbesondere des Felds 1 abge bildet werden. Das Aggregieren geschieht vorzugsweise von einer Arbeitsmaschine 7 oder, insbesondere nach Art einer virtuellen Arbeitsmaschine 7, von mehreren oder allen Arbeitsmaschinen 3 des Verbunds 2 zusammen. Es kann jedoch auch vorgesehen sein, dass dies beispielsweise von einem externen Server erledigt wird.

Ganz grundsätzlich wird es zumeist so sein, dass mehrere Arbeitsmaschinen 3 des Verbunds 2 gleichartige Arbeitsaggregate 4 aufweisen. Dann ist es vorzugsweise so, dass jeweils gleichartige Arbeitsaggregate 4 zu jeweils einem virtuellen Arbeitsaggregat 8 zusammengefasst werden. Diese virtuellen Arbeitsaggregate können insofern die virtuelle Arbeitsmaschine 7 bilden. Vorzugsweise werden nun optimierte Maschinenparameter für das jeweilige virtuelle Arbeitsaggregat 8 ermittelt, die anschließend von mehreren der Arbeitsmaschinen 3 des Verbunds 2, die dieses Arbeitsaggregat 4 aufweisen, für das jeweilige Arbeitsaggregat 4 verwendet werden.

Das Zusammenfassen gleichartiger Arbeitsaggregate 4 zu virtuellen Arbeitsaggregaten 8 muss nicht für alle gleichartigen Arbeitsaggregate 4 geschehen. Vorzugsweise fassen zumindest Arbeitsmaschinen 3 des Verbunds 2, die sich in der gleichen Feldzone 5 befinden, ihre Arbeitsaggregate 4 zusammen. So wird es möglich, nicht alle Arbeitsaggregate 4 des Verbunds 2 einzeln zu optimieren, sondern Arbeitsaggregate 4 mit ähnlichen Eigenschaften und unter ähnlichen landwirtschaftlichen Bedingungen gemeinsam zu optimieren, wodurch einerseits eine Konsistenz im Verbund 2 gewahrt wird und andererseits Rechenleistung eingespart wird. Wie der Verbund 2 als Gesamtes diese virtuellen Arbeitsaggregate 8 optimieren kann, wird im Folgenden noch erläutert. Als eine bevorzugte Lösung kann jedoch schon hier genannt werden, dass jeweils eine Arbeitsmaschine 3 des Verbunds 2 ein virtuelles Arbeitsaggregat 8 optimiert, indem sie hierfür optimierte Maschinenparameter erzeugt.

Grundsätzlich kann vorgesehen sein, dass mehrere Arbeitsmaschinen 3 des Verbunds 2 jeweils optimierte Maschinenparameter zu einem Teil ihrer jeweiligen Arbeitsaggregate 4 ermitteln und anderen Arbeitsmaschinen 3 des Verbunds 2 zur Verfügung stellen. Zu einem anderen Teil ihrer jeweiligen Arbeitsaggregate 4 können sie von anderen Arbeitsmaschinen 3 des Verbunds 2 optimierte Maschinenparameter empfangen, die von diesen anderen Arbeitsma schinen 3 des Verbunds 2 erzeugt wurden. Dies kann alternativ zu dem Zusammenfassen von Arbeitsaggregaten 4 zu virtuellen Arbeitsaggregaten 8 geschehen, vorzugsweise geschieht es jedoch zusätzlich. So kann vorgesehen sein, dass gewisse Arbeitsaggregate 4 der Arbeitsmaschinen 3 des Verbunds 2 zusammengefasst werden, da die jeweiligen Arbeitsmaschinen 3 des Verbunds 2 gleichartig sind und sich in einer gemeinsamen Feldzone 5 befinden, während andere Arbeitsmaschinen 3 des Verbunds 2 nur wenige optimierte Maschinenparameter von den anderen Arbeitsmaschinen 3 des Verbunds 2 übernehmen können. Beispielsweise kann eine Arbeitsmaschine 3 des Verbunds 2 temporär eine Feldzone 5 mit einem hohen Unkrautbesatz abarbeiten, wodurch keine Vergleichbarkeit oder nur eine geringe Vergleichbarkeit mit anderen Arbeitsmaschinen 3 des Verbunds 2 gegeben ist.

Die jeweiligen Arbeitsmaschinen 3 des Verbunds 2 können die empfangenen, optimierten Maschinenparameter der anderen Arbeitsmaschinen 3 des Verbunds 2 entweder direkt übernehmen oder zumindest teilweise in ihre eigene Optimierung einfließen lassen.

In Fortführung des gerade erwähnten Beispiels, dass einige Arbeitsmaschinen 3 des Verbunds 2 nicht immer mit dem Rest der Arbeitsmaschinen 3 des Verbunds 2 vergleichbar sind, kann vorgesehen sein, dass einige der Arbeitsmaschinen 3 des Verbunds 2 jeweils optimierte Maschinenparameter zu allen ihren Arbeitsaggregaten 4 autark ermitteln. Dies geschieht dann jedoch auf Basis von, von anderen Arbeitsmaschinen 3 des Verbunds 2 empfangenen, Daten, insbesondere Sensordaten, ermitteln. Bei diesen Sensordaten kann es sich um die virtuellen Sensordaten handeln.

Es kann außerdem vorgesehen sein, dass die Arbeitsmaschinen 3 des Verbunds 2 jeweils oder gemeinsam die optimierten Maschinenparameter auf Basis von Feldbedingungen erzeugen. Diese Feldbedingungen können dabei aus den Sensordaten erzeugt worden sein, oder aus einer externen Quelle stammen. Beispiele für Feldbedingungen aus externen Quellen sind Wetterdaten oder Satellitenbilder des Feldbestands. Vorzugsweise ist vorgesehen, dass die Feldbedingungen an verschiedenen Stützstellen 9 auf dem Feld 1 gemessen werden. Damit nicht jede Arbeitsmaschine 3 des Verbunds 2 alle Stützstellen 9 des Felds 1 anfahren muss, um genügend Daten für die Feldbedingungen zu sammeln, ist vorzugsweise vorgesehen, dass die verschiedenen Stützstellen 9 von verschiedenen Arbeitsmaschinen 3 des Verbunds 2 angefahren werden und die jeweiligen Arbeitsmaschinen 3 dort jeweils die Feldbedingungen messen. Analog zu den Sensordaten können die Feldbedingungen ausgetauscht oder zu virtuellen Feldbedingungen aggregiert werden. Bevor nun die Arbeitsverteilung im Verbund 2 thematisiert wird, sei erwähnt, dass die Arbeitsmaschinen 3 des Verbunds 2 vorzugsweise gemeinsam nach Art einer virtuellen Arbeitsmaschine zusammenarbeiten, indem sie Arbeitsprozessdaten, insbesondere georeferenziert, austauschen. Diese Arbeitsprozessdaten können Bestandsbedingungen und/oder Fruchtdaten und/oder aktuelle Qualitäts- und Leistungsdaten der Arbeitsmaschinen 3 des Verbunds 2 und/oder Prozessmodelle, beispielsweise zur Verarbeitung der oben erwähnten Kennfelder, umfassen.

Zur Erhöhung einer Ernteleistung und/oder Erntequalität weist der Verbund 2 einen Flotten-Prozess-Supervisor auf, der die Erzeugung der optimierten Maschinenparameter koordiniert und/oder delegiert. Dieser Flotten-Prozess-Supervisor kann auf einer einzelnen Arbeitsmaschine 3 des Verbunds 2 laufen, auf mehreren Arbeitsmaschinen 3 des Verbunds 2 oder auch beispielsweise auf einem externen Server oder Mobilgerät. Sowohl der Begriff "koordinieren" als auch der Begriff "delegieren" beziehen sich hier auf die Verteilung von Aufgaben. Hierbei stellt der Flotten-Prozess-Supervisor sicher, dass die einzelnen Arbeitsmaschinen 3 des Verbunds 2 ihre Aufgaben kennen und abarbeiten und koordiniert sie somit, oder der Flotten-Prozess-Supervisor erstellt, zumindest teilweise, die Abzuarbeitenden Aufgaben und delegiert die Abarbeitung dann.

Erfindungsgemäß teilt der Flotten-Prozess-Supervisor die Erzeugung der optimierten Maschinenparameter in Optimierungsaufgaben auf und verteilt die Optimierungsaufgaben an mehrere der Arbeitsmaschinen 3 des Verbunds 2. Dies ist insbesondere dann vorteilhaft, wenn die Erzeugung der optimierten Maschinenparameter für die virtuellen Arbeitsaggregate 8 vorgenommen wird. Die Optimierungsaufgaben werden von dem Flotten-Prozess-Supervisor vorzugsweise basierend auf einer Ausstattung der Arbeitsmaschine 3 des Verbunds 2 verteilt. Diese Ausstattung kann sich auf das Fahrerassistenzsystem 6 der jeweiligen Arbeitsmaschine 3 des Verbunds 2 beziehen. Dementsprechend können die Optimierungsaufgaben so verteilt werden, dass jeweils die Arbeitsmaschine 3 des Verbunds 2, die hierfür die beste Hardware aufweist, die Optimierungsaufgabe erfüllt. Dies trägt dem Umstand Rechnung, dass die Fahrerassistenzsysteme 6 der verschiedenen Arbeitsmaschinen 3 des Verbunds sehr unterschiedlich ausgestaltet sein können. Möglicherweise sind die Fahrerassistenzsysteme 6 des Verbunds 2 sogar so ausgestaltet, dass eine Optimierung des Verbunds 2 nur aufgrund der Arbeitsteilung möglich ist, da nicht genug Rechenleistung zur Verfügung steht, um jede Arbeitsmaschine 3 des Verbunds 2 autark zu optimieren. Hier ist zu erwähnen, dass sämtliche Rechenschritte im Rahmen des vorschlagsgemäßen Verfahrens vorzugsweise von dem jeweiligen Fahrerassistenzsystem 6 der jeweiligen Arbeitsmaschine 3 oder von mehreren Fahrerassistenzsystemen 6 der Arbeitsmaschinen 3 des Verbunds 2 gemeinsam durchgeführt werden.

Während es denkbar ist, dass die Arbeitsmaschinen 3 des Verbunds 2 spontan mit ihrer Zusammenarbeit beginnen, ist es erfindungsgemäß so, dass zu Beginn der Abarbeitung des landwirtschaftlichen Arbeitsprozesses die Arbeitsmaschinen 3 des Verbunds 2 eine Synchronisationsroutine durchführen, in der Konfigurationen der Arbeitsmaschinen 3 miteinander verglichen werden und/oder Korrekturfaktoren für eine Umrechnung der jeweiligen optimierten Maschinenparameter zwischen den Arbeitsmaschinen 3 ermittelt werden. So kann beispielsweise ein Mähdrescher ein Arbeitsaggregat 4 aufweisen, das größer dimensioniert ist, als ein gleichartiges Arbeitsaggregat 4 eines anderen Mähdreschers. Diese Unterschiede werden hier identifiziert und vorzugsweise wird ermittelt, ob optimierte Maschinenparameter einer Arbeitsmaschine 3 des Verbunds 2 mit Hilfe von Korrekturfaktoren, die im weiteren Sinne jegliche Art von Korrekturvorschrift umfassen, in optimierte Maschinenparameter für eine andere Arbeitsmaschine 3 des Verbunds 2 umgerechnet werden können.

Es kann auch vorgesehen sein, dass in der Synchronisationsroutine Widersprüche zwischen den Konfigurationen der Arbeitsmaschinen 3 des Verbunds 2 ermittelt werden und dass die Widersprüche einem Benutzer angezeigt und/oder automatisch behoben werden. Ein derartiger Widerspruch kann zum Beispiel eine fälschlicherweise eingestellte Fruchtart bei einer der Arbeitsmaschinen 3 des Verbunds 2 sein. Ist bei allen anderen Arbeitsmaschinen 3 des Verbunds 2 eine andere Fruchtart eingestellt, kann dieser Widerspruch automatisch behoben werden. Es kann jedoch auch vorgesehen sein, dass der Widerspruch dem Benutzer angezeigt wird und dieser darauf reagieren kann.

Um die Effizienz der Zusammenarbeit des Verbunds 2 noch weiter zu steigern und weniger Rechenleistung im Verbund 2 selbst zu benötigen, kann vorgesehen sein, dass vor Beginn der Abarbeitung des landwirtschaftlichen Arbeitsprozesses eine Vorverarbeitungsroutine durchgeführt wird. Diese wird dann vorzugsweise auf einem Backend-Computer 10 extern zu dem Verbund 2 durchgeführt. Bei dem Backend-Computer kann es sich um einen Hofrechner oder auch um eine Cloud handeln. Vorzugsweise werden in der Vorverarbeitungsroutine die Korrekturfaktoren ermittelt. Zusätzlich oder alternativ kann das Anfahren der Stützstellen 9 in der Vorverarbeitungsroutine geplant werden. Weiter zusätzlich oder alternativ kann es sein, dass die optimierten Maschinenparameter auf Basis eines Modells, insbesondere Prozessmodells, der virtuellen Arbeitsmaschine 8 erzeugt werden und dass das Modell in der Vorverarbeitungsroutine erstellt oder parametriert wird. Da landwirtschaftliche Arbeitsprozesse üblicherweise im Voraus geplant werden und auch bekannt ist, welche Arbeitsmaschinen 3 in einem Verbund 2 eingesetzt werden sollen, kann die Abstimmung dieser Arbeitsmaschinen so bereits im Voraus erfolgen.

Die Korrekturfaktoren werden vorzugsweise während der Abarbeitung des landwirtschaftlichen Arbeitsprozesses auf Basis der, insbesondere virtuellen, Sensordaten kontinuierlich und/oder zyklisch und/oder ereignisbasiert angepasst. Aus den Korrekturfaktoren, insbesondere aus einem Zeitverlauf der Korrekturfaktoren, entweder während der Abarbeitung des landwirtschaftlichen Arbeitsprozesses oder vorzugsweise über einen längeren Zeitraum, oder einem Vergleich der Korrekturfaktoren gleichartiger Arbeitsmaschinen 3, kann auf einen Wartungsbedarf einer Arbeitsmaschine 3 geschlossen werden. So kann beispielsweise eine regelmäßig notwendige Anpassung auf eine Alterung hinweisen.

Aufgrund der vielfältigen Vorteile davon, Daten vergangener Zusammenarbeiten von landwirtschaftlichen Arbeitsmaschinen 3 in Verbünden 2 erneut abrufen zu können, werden Daten des Verbunds 2 vorzugsweise abgespeichert. Dieses Abspeichern kann auf den Arbeitsmaschinen 3 des Verbunds 2 und/oder extern dazu geschehen. Vorzugsweise werden insbesondere die Korrekturfaktoren fruchtartspezifisch abgespeichert.

Die Korrekturfaktoren werden vorzugsweise auf Basis von, zu den Arbeitsmaschinen 3 des Verbunds 2 extern gesammelten, Referenzinformationen ermittelt. Derartige Referenzinformationen können auch genutzt werden, um die Prozessmodelle zu parametrieren. Diese Prozessmodelle werden dabei von dem Fahrerassistenzsystem 6 der jeweiligen Arbeitsmaschine 3 genutzt, um die optimierten Maschinenparameter zu ermitteln. Die Korrekturfaktoren können auch Teil der Prozessmodelle sein. So kann ein Prozessmodell zum Beispiel den Einfluss von Feuchtigkeit auf das Häckselwerk eines Feldhäckslers abbilden. Die Prozessmodelle können dabei arbeitsmaschinenspezifisch sein, oder mehrere Arbeitsmaschinen des Verbunds 2 abbilden. Die Referenzinformationen können Labordaten wie Körnerbruch, Eiweißgehalt und andere umfassen und aus vergangenen Arbeitsprozessen stammen.

Da Sensoren 11 auch bei landwirtschaftlichen Arbeitsmaschinen 3 normalerweise justiert und/oder kalibriert werden müssen, kann vorgesehen sein, dass die Sensoren 11 der Arbeitsmaschinen 3 des Verbunds 2 auf Basis der Sensordaten anderer Arbeitsmaschinen 3 des Verbunds 2 justiert und/oder kalibriert werden. So können zum Beispiel Abweichungen durch altersbedingte Sensorverstimmungen identifiziert und korrigiert werden.

Entsprechend ist es sogar möglich, dass bei einem Sensorausfall einer Arbeitsmaschine 3 des Verbunds 2 diese Arbeitsmaschine 3 Sensordaten zumindest einer anderen Arbeitsmaschine 3 des Verbunds 2 oder die virtuellen Sensordaten verwendet, um den Sensorausfall, zumindest teilweise, zu kompensieren. So kann verhindert werden, dass diese Arbeitsmaschine 3 möglicherweise komplett ausfällt.

Bei der Abarbeitung des landwirtschaftlichen Arbeitsprozesses und/oder in der Synchronisationsroutine und/oder in der Vorverarbeitungsroutine können Daten eines anderen, gleichartigen Verbundes verwendet werden. Vorzugsweise werden Korrekturfaktoren des gleichartigen Verbundes verwendet, die weiter vorzugsweise in der Vorverarbeitungsroutine und/oder der Synchronisationsroutine angepasst werden. So wird erneut Rechenleistung eingespart.

Da wie bereits erwähnt manche Arbeitsmaschinen 3 des Verbunds 2 ab und an nicht mit den anderen Arbeitsmaschinen 3 des Verbunds 2 vergleichbar sind, zum Beispiel in einer Feldzone 5 mit einem hohen Unkrautbesatz oder in einer Senke mit hoher Feuchtigkeit, ist vorzugsweise vorgesehen, dass ein Beitrag einer Arbeitsmaschine zur virtuellen Arbeitsmaschine durch einen Benutzer pausiert werden kann. Bei diesem Benutzer kann es sich zum Beispiel um einen Fahrer, aber auch um einen Verbundmanager handeln.

Zusätzlich oder alternativ kann der Verbund 2 eine Qualitätssicherung aufweisen, die Beiträge einer Arbeitsmaschine 3 zur virtuellen Arbeitsmaschine 8 ausschließen und/oder pausieren kann. Vorzugsweise bewertet die Qualitätssicherung hierfür die Beiträge einer Arbeitsmaschine 3 zur virtuellen Arbeitsmaschine 8 nach Qualitätskriterien und schließt den Beitrag auf Basis der Qualitätskriterien aus oder pausiert ihn. Diese Qualitätskriterien können die Ausstattung der Arbeitsmaschine 3 des Verbunds 2 und/oder lokale Feldbedingungen der Arbeitsmaschine 3 des Verbunds 2 betreffen.

Wie erwähnt kann ein Benutzer einen Beitrag einer Arbeitsmaschine 3 des Verbunds 2 zur virtuellen Arbeitsmaschine 8 pausieren. Hierfür, jedoch auch ganz allgemein, ist vorzugsweise vorgesehen, dass der Benutzer, insbesondere mittels eines mobilen Geräts, die Abarbeitung des landwirtschaftlichen Prozesses steuern und/oder überprüfen kann.

Da Verbünde 2 aus landwirtschaftlichen Arbeitsmaschinen 3 zum Teil sehr unterschiedliche Typen von landwirtschaftlichen Arbeitsmaschinen 3 aufweisen, die nicht immer gemeinsam optimiert werden können oder sollen, kann vorgesehen sein, dass die Arbeitsmaschinen 3 des Verbunds 2 landwirtschaftliche Arbeitsmaschinen 3 desselben Typs, insbesondere des Typs Mähdrescher oder Feldhäcksler, sind. Diese weisen somit gleichartige Arbeitsaggregate 4 auf. Sie können dann als virtuelle Arbeitsmaschine 8 dieses Typs zusammenarbeiten. Alternativ kann der Verbund 2 zumindest eine Arbeitsmaschine 3 eines anderen Typs umfassen wenn sie gemeinsam denselben landwirtschaftlichen Arbeitsprozess, insbesondere einem Ernteprozess des Felds 1, abarbeiten. Beispielsweise kann ein Verbund aus Mähdreschern zum Ernten von Korn und Überladern zum Abfahren von Korn bestehen.

Gerade wenn Arbeitsmaschinen 3 eines Typs zusammengefasst werden, kann vorgesehen sein, dass die Arbeitsmaschinen 3 des Verbunds 2 mit mindestens einem weiteren Verbund 2 landwirtschaftlicher Arbeitsmaschinen 3 kooperieren, die ebenfalls gemeinsam nach Art einer virtuellen Arbeitsmaschine 8 zusammenarbeiten. Diese Kooperation kann so ausgestaltet sein, dass die Verbünde 2 gemeinsam nach Art einer weiteren virtuellen, abstrakteren, Arbeitsmaschine 8 als virtueller Verbund virtueller Arbeitsmaschinen 8 zusammenarbeiten. So können zum Beispiel Arbeitsmaschinen 3 des Typs Mähdrescher als ein Verbund 2 zusammenarbeiten, ein anderer Verbund 2 kann aus Überladern bestehen. Diese Verbünde 2 können jeweils zu einer virtuellen Arbeitsmaschine 8 zusammengefasst werden und diese beiden virtuellen Arbeitsmaschinen 8 können dann wiederum gemeinsam nach Art einer, übergeordneten, virtuellen Arbeitsmaschine 8 zusammenarbeiten. So würde dann der Verbund 2 aus Mähdreschern das Abernten des Feldes koordinieren, der Verbund 2 aus Überladern das Abfahren der Ernte und der übergeordnete Verbund würde die Zusammenarbeit der Verbünde 2 koordinieren.

### Bezugszeichenliste

- 1: Feld
- 2: Verbund
- 3: Landwirtschaftliche Arbeitsmaschine
- 4: Arbeitsaggregat
- 5: Feldzone
- 6: Fahrerassistenzsystem
- 7: Virtuelle Arbeitsmaschine
- 8: Virtuelles Arbeitsaggregat
- 9: Stützstelle
- 10: Backend-Computer
- 11: Sensor

## Patentansprüche

1. Verfahren zur Abarbeitung eines landwirtschaftlichen Arbeitsprozesses auf einem Feld (1) mittels eines Verbunds (2) aus landwirtschaftlichen Arbeitsmaschinen (3), wobei die Arbeitsmaschinen (3) des Verbunds (2) jeweils Arbeitsaggregate (4) aufweisen, die zur Anpassung an die jeweiligen landwirtschaftlichen Bedingungen mit Maschinenparametern einstellbar sind, wobei die Arbeitsmaschinen (3) des Verbunds (2) über ein drahtloses Datennetzwerk miteinander kommunizieren,
wobei die Arbeitsmaschinen (3) des Verbunds (2) als selbstoptimierende Arbeitsmaschinen (3) ausgestaltet sind, die je ein Fahrerassistenzsystem (6) zur automatisierten Erzeugung und Einstellung von hinsichtlich der landwirtschaftlichen Bedingungen optimierten Maschinenparametern aufweisen,
wobei die Arbeitsmaschinen (3) des Verbunds (2) gemeinsam nach Art einer virtuellen Arbeitsmaschine (7) in der Weise zusammenarbeiten, dass die Ergebnisse einer Selbstoptimierung insbesondere in Form der optimierten Maschinenparameter mehrerer der Arbeitsmaschinen (3) des Verbunds (2) wieder in den Verbund (2) zurückfließen, um dort von anderen Arbeitsmaschinen (3) des Verbunds (2) weiter verwendet zu werden, **dadurch gekennzeichnet, dass** der Verbund einen Flotten-Prozess-Supervisor aufweist, der die Erzeugung der optimierten Maschinenparameter koordiniert und/oder delegiert, dass der Flotten-Prozess-Supervisor die Erzeugung der optimierten Maschinenparameter, insbesondere für die virtuellen Arbeitsaggregate (8), in Optimierungsaufgaben aufteilt und die Optimierungsaufgaben an mehrere der Arbeitsmaschinen (3) des Verbunds (2) verteilt, wobei die Optimierungsaufgaben basierend auf einer Ausstattung, vorzugsweise des Fahrerassistenzsystems (6), der Arbeitsmaschinen (3) des Verbunds (2) verteilt werden, und zu Beginn der Abarbeitung des landwirtschaftlichen Arbeitsprozesses die Arbeitsmaschinen (3) des Verbunds (2) eine Synchronisationsroutine durchführen, dass in der Synchronisationsroutine Konfigurationen der Arbeitsmaschinen (3) miteinander verglichen werden und/oder Korrekturfaktoren für eine Umrechnung der jeweiligen optimierten Maschinenparameter zwischen den Arbeitsmaschinen (3) ermittelt werden, weiter vorzugsweise, dass Widersprüche zwischen den Konfigurationen der Arbeitsmaschinen (3) des Verbunds (2) ermittelt werden und dass die Widersprüche einem Benutzer angezeigt und/oder automatisch behoben werden.

2. Verfahren nach Anspruch 1, **dadurch gekennzeichnet, dass** die Arbeitsmaschinen (3) des Verbunds (2) jeweils Sensordaten generieren und dass mehrere der Arbeitsmaschinen (3) des Verbunds (2) Sensordaten anderer Arbeitsmaschinen (3) des Verbunds (2) bei der Erzeugung ihrer jeweiligen optimierten Maschinenparameter berücksichtigen, und/oder, dass die Arbeitsmaschinen des (3) Verbunds (2) gemeinsam Sensordaten sammeln und diese zu virtuellen Sensordaten aggregiert werden.

3. Verfahren nach Anspruch 1 oder 2, **dadurch gekennzeichnet, dass** mehrere Arbeitsmaschinen (3) des Verbunds (2) gleichartige Arbeitsaggregate (4) aufweisen, dass jeweils gleichartige Arbeitsaggregate (4) zu jeweils einem virtuellen Arbeitsaggregat (8) zusammengefasst werden und dass optimierte Maschinenparameter für das jeweilige virtuelle Arbeitsaggregat (8) erzeugt werden, die anschließend von mehreren der Arbeitsmaschinen (3) des Verbunds (2), die dieses Arbeitsaggregat (4) aufweisen, für das jeweilige Arbeitsaggregat (4) verwendet werden.

4. Verfahren nach einem der vorhergehenden Ansprüche, **dadurch gekennzeichnet, dass** mehrere Arbeitsmaschinen (3) des Verbunds (2) jeweils optimierte Maschinenparameter zu einem Teil ihrer jeweiligen Arbeitsaggregate (4) erzeugen und anderen Arbeitsmaschinen (3) des Verbunds (2) zur Verfügung stellen und zu einem anderen Teil ihrer jeweiligen Arbeitsaggregate (4), von anderen Arbeitsmaschinen (3) des Verbunds (2) erzeugte, optimierte Maschinenparameter von diesen anderen Arbeitsmaschinen (3) des Verbunds (2) empfangen.

5. Verfahren nach einem der vorhergehenden Ansprüche, **dadurch gekennzeichnet, dass** einige der Arbeitsmaschinen (3) des Verbunds (2) jeweils optimierte Maschinenparameter zu allen ihren Arbeitsaggregaten (4) autark auf Basis von, von anderen Arbeitsmaschinen (3) des Verbunds (2) empfangenen, Daten, insbesondere Sensordaten, erzeugen.

6. Verfahren nach einem der vorhergehenden Ansprüche, **dadurch gekennzeichnet, dass** die Arbeitsmaschinen (3) des Verbunds (2) jeweils oder gemeinsam die optimierten Maschinenparameter auf Basis von Feldbedingungen erzeugen, dass die Feldbedingungen an verschiedenen Stützstellen (9) auf dem Feld gemessen werden, vorzugsweise, dass die verschiedenen Stützstellen (9) von verschiedenen Arbeitsmaschinen (3) des Verbunds (2) angefahren werden und die jeweiligen Arbeitsmaschinen (3) des Verbunds (2) dort jeweils die Feldbedingungen messen.

7. Verfahren nach einem der vorhergehenden Ansprüche, **dadurch gekennzeichnet, dass** die Arbeitsmaschinen (3) des Verbunds (2) gemeinsam nach Art einer virtuellen Arbeitsmaschine (7) zusammenarbeiten, indem sie Arbeitsprozessdaten, insbesondere georeferenziert, austauschen, vorzugsweise, dass diese Arbeitsprozessdaten Bestandsbedingungen und/oder Fruchtdaten und/oder aktuelle Qualitäts- und Leistungsdaten der Arbeitsmaschinen des Verbunds und/oder Prozessmodelle umfassen.

8. Verfahren nach einem der vorhergehenden Ansprüche, **dadurch gekennzeichnet, dass** vor Beginn der Abarbeitung des landwirtschaftlichen Arbeitsprozesses eine Vorverarbeitungsroutine, insbesondere auf einem Backend-Computer extern zu dem Verbund (2), durchgeführt wird, vorzugsweise, dass die Korrekturfaktoren in der Vorverarbeitungsroutine ermittelt werden, und/oder, dass das Anfahren der Stützstellen (9) in der Vorverarbeitungsroutine geplant wird, und/oder, dass die optimierten Maschinenparameter auf Basis eines Modells der virtuellen Arbeitsmaschine (7) erzeugt werden und dass das Modell in der Vorverarbeitungsroutine erstellt oder parametriert wird.

9. Verfahren nach Anspruch 8, **dadurch gekennzeichnet, dass** während der Abarbeitung des landwirtschaftlichen Arbeitsprozesses die Korrekturfaktoren auf Basis der, insbesondere virtuellen, Sensordaten kontinuierlich und/oder zyklisch und/oder ereignisbasiert angepasst werden, vorzugsweise, dass aus den Korrekturfaktoren auf einen Wartungsbedarf einer Arbeitsmaschine (3) geschlossen wird.

10. Verfahren nach einem der Ansprüche 8 und 9, **dadurch gekennzeichnet, dass** die Korrekturfaktoren auf Basis von zu den Arbeitsmaschinen (3) des Verbunds (2) extern gesammelten Referenzinformationen ermittelt werden.

11. Verfahren nach einem der Ansprüche 2 bis 10, **dadurch gekennzeichnet, dass** Sensoren (11) der Arbeitsmaschinen (3) des Verbunds (2) auf Basis der Sensordaten anderer Arbeitsmaschinen (3) des Verbunds (2) justiert und/oder kalibriert werden.

12. Verfahren nach einem der vorhergehenden Ansprüche, **dadurch gekennzeichnet, dass** bei einem Sensorausfall einer Arbeitsmaschine (3) des Verbunds (2) diese Arbeitsmaschine (3) Sensordaten zumindest einer anderen Arbeitsmaschine (3) des Verbunds (2) oder die virtuellen Sensordaten verwendet, um den Sensorausfall, zumindest teilweise, zu kompensieren.

13. Verfahren nach einem der vorhergehenden Ansprüche, **dadurch gekennzeichnet, dass** bei der Abarbeitung des landwirtschaftlichen Arbeitsprozesses und/oder in der Synchronisationsroutine und/oder in der Vorverarbeitungsroutine Daten eines anderen, gleichartigen Verbundes (2) verwendet werden, vorzugsweise, dass Korrekturfaktoren des gleichartigen Verbundes (2) verwendet werden, weiter vorzugsweise, dass die Korrekturfaktoren des gleichartigen Verbundes (2) in der Vorverarbeitungsroutine und/oder der Synchronisationsroutine angepasst werden.

14. Verfahren nach einem der vorhergehenden Ansprüche, **dadurch gekennzeichnet, dass** ein Beitrag einer Arbeitsmaschine (3) zur virtuellen Arbeitsmaschine (7) durch einen Benutzer pausiert werden kann.

15. Verfahren nach einem der vorhergehenden Ansprüche, **dadurch gekennzeichnet, dass** der Verbund (2) eine Qualitätssicherung aufweist, die Beiträge einer Arbeitsmaschine (3) des Verbunds (2) zur virtuellen Arbeitsmaschine (7) ausschließen und/oder pausieren kann, vorzugsweise, dass die Qualitätssicherung die Beiträge einer Arbeitsmaschine (3) des Verbunds (2) zur virtuellen Arbeitsmaschine (7) nach Qualitätskriterien bewertet und auf Basis der Qualitätskriterien ausschließt oder pausiert, weiter vorzugsweise, dass die Qualitätskriterien die Ausstattung der Arbeitsmaschine (3) des Verbunds (2) und/oder lokale Feldbedingungen der Arbeitsmaschine (3) des Verbunds (2) betreffen.

16. Verfahren nach einem der vorhergehenden Ansprüche, **dadurch gekennzeichnet, dass** ein Benutzer, insbesondere mittels eines mobilen Geräts, die Abarbeitung des landwirtschaftlichen Prozesses steuern und/oder überprüfen kann.

17. Verfahren nach einem der vorhergehenden Ansprüche, **dadurch gekennzeichnet, dass** die Arbeitsmaschinen (3) des Verbunds (2) landwirtschaftliche Arbeitsmaschinen (3) desselben Typs, insbesondere des Typs Mähdrescher oder Feldhäcksler, sind und somit gleichartige Arbeitsaggregate (4) aufweisen und als virtuelle Arbeitsmaschine (7) dieses Typs zusammenarbeiten, oder, dass die Arbeitsmaschinen (3) des Verbunds (2) zumindest eine Arbeitsmaschine (3) eines anderen Typs umfassen und gemeinsam denselben landwirtschaftlichen Arbeitsprozess, insbesondere einen Ernteprozess des Felds (1), abarbeiten.

18. Verfahren nach einem der vorhergehenden Ansprüche, **dadurch gekennzeichnet, dass** die Arbeitsmaschinen (3) des Verbunds (2) mit mindestens einem weiteren Verbund (2) landwirtschaftlicher Arbeitsmaschinen (3) kooperieren, die ebenfalls gemeinsam nach Art einer virtuellen Arbeitsmaschine (7) zusammenarbeiten, vorzugsweise, dass die Verbünde (2) gemeinsam nach Art einer weiteren virtuellen Arbeitsmaschine (7) als virtueller Verbund virtueller Arbeitsmaschinen (7) zusammenarbeiten.

## Claims

1. A method for executing an agricultural operating procedure on a field (1) by means of a group (2) of agricultural working machines (3), wherein the working machines (3) of the group (2) each have working assemblies (4) which can be adjusted with machine parameters for adaptation to the respective agricultural conditions, wherein the working machines (3) of the group (2) communicate with each other via a wireless data network, wherein the working machines (3) of the group (2) are configured as self-optimising working machines (3) which each have a driver assistance system (6) for the automated generation and adjustment of machine parameters which have been optimised with respect to the agricultural conditions, wherein the working machines (3) of the group (2) collectively cooperate in the manner of a virtual working machine (7) such that the results of a self-optimisation are fed back into the group (2), in particular in the form of the optimised machine parameters from a plurality of the working machines (3) of the group (2), in order to be used further by other working machines (3) of the group (2), **characterized in that** the group has a fleet process supervisor which coordinates and/or delegates the generation of the optimised machine parameters, **in that** the fleet process supervisor divides the generation of the optimised machine parameters into optimisation tasks, in particular for the virtual working assemblies (8), and distributes the optimisation tasks to a plurality of the working machines (3) of the group (2), wherein the optimisation tasks are distributed on the basis of an outfitting, preferably of the driver assistance system (6), of the working machines (3) of the group (2), and at the start of the execution of the agricultural operating procedure, the working machines (3) of the group (2) carry out a synchronization routine, **in that** in the synchronization routine, configurations of the working machines (3) are compared with one another and/or correction factors are determined for a conversion of the respective optimised machine parameters between the working machines (3), more preferably **in that** conflicts between the configurations of the working machines (3) of the group (2) are determined, and **in that** the conflicts are indicated to a user and/or automatically resolved.

2. The method according to claim 1, **characterized in that** the respective working machines (3) of the group (2) generate sensor data, and **in that** a plurality of the working machines (3) of the group (2) take into consideration sensor data of other working machines (3) of the group (2) when generating their respective optimised machine parameters, and/or **in that** the working machines (3) of the group (2) together collect sensor data and aggregate them into virtual sensor data.

3. The method according to claim 1 or claim 2, **characterized in that** a plurality of working machines (3) of the group (2) have similar working assemblies (4), **in that** respective similar working assemblies (4) are respectively combined to form a virtual working assembly (8), and **in that** optimised machine parameters are generated for the respective virtual working assembly (8), which are subsequently utilized for the respective working assembly (4) by a plurality of the working machines (3) of the group (2) which have this working assembly (4).

4. The method according to one of the preceding claims, **characterized in that** a plurality of the working machines (3) of the group (2) respectively generate optimised machine parameters for a portion of their respective working assemblies (4) and make them available to other working machines (3) of the group (2) and another portion of their respective working assemblies (4) receives optimised machine parameters generated by other working machines (3) of the group (2) from these other working machines (3) of the group (2).

5. The method according to one of the preceding claims, **characterized in that** some of the working machines (3) of the group (2) autonomously generate respective optimised machine parameters for all of their working assemblies (4) on the basis of data, in particular sensor data, received from other working machines (3) of the group (2).

6. The method according to one of the preceding claims, **characterized in that** the working machines (3) of the group (2), respectively or collectively, generate the optimised machine parameters on the basis of field conditions, **in that** the field conditions are measured at different sampling points (9) on the field (1), preferably **in that** the different sampling points (9) are visited by different working machines (3) of the group (2) and there, the respective working machines (3) of the group (2) measure the respective field conditions.

7. The method according to one of the preceding claims, **characterized in that** the working machines (3) of the group (2) cooperate collectively in the manner of a virtual working machine (7) **in that** they exchange operating procedure data, in particular georeferenced, preferably **in that** these operating procedure data comprise crop conditions and/or crop data and/or current quality data and performance data for the working machines of the group and/or process models.

8. The method according to one of the preceding claims, **characterized in that** before beginning the execution of the agricultural operating procedure, a preprocessing routine is carried out, in particular on a back end computer external to the group (2), preferably **in that** the correction factors are determined in the preprocessing routine, and/or **in that** the visiting of the sampling points (9) is planned in the preprocessing routine, and/or **in that** the optimised machine parameters are generated on the basis of a model of the virtual working machine (7), and **in that** the model is generated or parameterized in the preprocessing routine.

9. The method according to claim 8, **characterized in that** the correction factors are adapted continuously and/or cyclically and/or in an event-based manner during the execution of the agricultural operating procedure on the basis of the sensor data, in particular virtual sensor data, preferably **in that** a maintenance requirement for a working machine (3) is inferred from the correction factors.

10. The method according to one of claims 8 and 9, **characterized in that** the correction factors are determined on the basis of reference information which is collected externally with respect to the working machines (3) of the group (2).

11. The method according to one of claims 2 to 10, **characterized in that** sensors (11) of the working machines (3) of the group (2) are adjusted and/or calibrated on the basis of the sensor data from other working machines (3) of the group (2).

12. The method according to one of the preceding claims, **characterized in that**, in the event of failure of a sensor of a working machine (3) of the group (2), this working machine (3) uses sensor data from at least one other working machine (3) of the group (2) or the virtual sensor data in order to compensate, at least partially, for the sensor failure.

13. The method according to one of the preceding claims, **characterized in that** during the execution of the agricultural operating procedure and/or in the synchronization routine and/or in the preprocessing routine, data from another, similar group (2) are used, preferably **in that** correction factors for the similar group (2) are used, more preferably **in that** the correction factors for the similar group (2) are adapted in the preprocessing routine and/or in the synchronization routine.

14. The method according to one of the preceding claims, **characterized in that** a contribution from a working machine (3) to the virtual working machine (7) can be paused by a user.

15. The method according to one of the preceding claims, **characterized in that** the group (2) has a quality controller which can exclude and/or pause contributions from a working machine (3) of the group (2) to the virtual working machine (7), preferably **in that** the quality controller evaluates the contributions from a working machine (3) of the group (2) to the virtual working machine (7) in accordance with quality criteria and excludes or pauses on the basis of the quality criteria, more preferably **in that** the quality criteria relate to the outfitting of the working machine (3) of the group (2) and/or local field conditions of the working machine (3) of the group (2).

16. The method according to one of the preceding claims, **characterized in that** a user can control and/or monitor the execution of the agricultural process, in particular by means of a mobile device.

17. The method according to one of the preceding claims, **characterized in that** the working machines (3) of the group (2) are agricultural working machines (3) of the same type, in particular of the combine harvester and/or forage harvester type, and accordingly have similar working assemblies (4) and work together as a virtual working machine (7) of this type, or **in that** the working machines (3) of the group (2) comprise at least one working machine (3) of another type and collectively execute the same agricultural operating procedure, in particular a procedure for harvesting the field (1).

18. The method according to one of the preceding claims, **characterized in that** the working machines (3) of the group (2) cooperate with at least one further group (2) of agricultural working machines (3) which also work together collectively in the manner of a virtual working machine (7), preferably **in that** the groups (2) work together collectively in the manner of a further virtual working machine (7) as a virtual group of virtual working machines (7).

## Revendications

1. Procédé pour exécuter un processus de travail agricole dans un champ (1) à l'aide d'un ensemble (2) de machines agricoles (3), les machines (3) de l'ensemble (2) présentant chacune des organes de travail (4) qui peuvent être réglés avec des paramètres de machine en vue de l'adaptation aux conditions agricoles respectives, les machines (3) de l'ensemble (2) communiquant entre elles par l'intermédiaire d'un réseau de données sans fil,
les machines (3) de l'ensemble (2) étant conçues comme machines à auto-optimisation qui présentent chacune un système d'assistance au conducteur (6) destiné à la génération et au réglage automatisés de paramètres de machine optimisés en ce qui oncerne les conditions agricoles,
les machines (3) de l'ensemble (2) travaillant conjointement à la manière d'une machine virtuelle (7), de telle sorte que les résultats d'une auto-optimisation, notamment sous la forme des paramètres de machine optimisés de plusieurs des machines (3) de l'ensemble (2), retournent dans l'ensemble (2) afin d'y être réutilisés par d'autres machines (3) de l'ensemble (2),
**caractérisé en ce que**
l'ensemble présente un superviseur de processus de parc qui coordonne et/ou délègue la génération des paramètres de machine optimisés, **en ce que** le superviseur de processus de parc partage en tâches d'optimisation la génération des paramètres de machine optimisés, notamment pour les organes de travail virtuels (8), et répartit les tâches d'optimisation sur plusieurs des machines (3) de l'ensemble (2), les tâches d'optimisation étant réparties sur la base d'un équipement, de préférence du système d'assistance au conducteur (6), des machines (3) de l'ensemble (2), et les machines (3) de l'ensemble (2) exécutant un sous-programme de synchronisation au début de l'exécution du processus de travail agricole, **en ce que** dans le sous-programme de synchronisation, des configurations des machines (3) sont comparées entre elles et/ou des facteurs de correction sont déterminés pour une conversion des paramètres de machine optimisés respectifs entre les machines (3), **en ce que** par ailleurs, de préférence, des incohérences entre les configurations des machines (3) de l'ensemble (2) sont déterminées et que les incohérences sont indiquées à un utilisateur et/ou sont résolues de façon automatique.

2. Procédé selon la revendication 1, **caractérisé en ce que** les machines (3) de l'ensemble (2) génèrent chacune des données de capteurs et que plusieurs des machines (3) de l'ensemble (2) prennent en compte des données de capteurs d'autres machines (3) de l'ensemble (2) lors de la génération de leurs paramètres de machine optimisés respectifs, et/ou que les machines (3) de l'ensemble (2) collectent conjointement des données de capteurs et les agrègent en données de capteurs virtuelles.

3. Procédé selon la revendication 1 ou 2, **caractérisé en ce que** plusieurs machines (3) de l'ensemble (2) présentent des organes de travail (4) similaires, que des organes de travail (4) respectivement similaires sont rassemblés en un organe de travail virtuel (8) respectif, et que des paramètres de machine optimisés sont générés pour l'organe de travail virtuel (8) respectif et sont ensuite utilisés pour l'organe de travail (4) respectif par plusieurs des machines (3) de l'ensemble (2) qui présentent cet organe de travail (4).

4. Procédé selon l'une des revendications précédentes, **caractérisé en ce que** plusieurs machines (3) de l'ensemble (2) génèrent respectivement des paramètres de machine optimisés pour une partie de leurs organes de travail (4) respectifs et les mettent à disposition d'autres machines (3) de l'ensemble (2), et reçoivent, pour une autre partie de leurs organes de travail (4) respectifs, des paramètres de machine optimisés, générés par d'autres machines (3) de l'ensemble (2), en provenance de ces autres machines (3) de l'ensemble (2).

5. Procédé selon l'une des revendications précédentes, **caractérisé en ce que** quelques-unes des machines (3) de l'ensemble (2) génèrent respectivement des paramètres de machine optimisés pour tous leurs organes de travail (4), de manière autonome sur la base de données reçues en provenance d'autres machines (3) de l'ensemble (2), en particulier des données de capteurs.

6. Procédé selon l'une des revendications précédentes, **caractérisé en ce que** les machines (3) de l'ensemble (2) génèrent, chacune ou conjointement, les paramètres de machine optimisés, sur la base de conditions de champ, que les conditions de champ sont mesurées en différents points nodaux (9) dans le champ, de préférence que les différents points nodaux (9) sont rejoints par différentes machines (3) de l'ensemble (2), et les machines respectives (3) de l'ensemble (2) y mesurent respectivement les conditions de champ.

7. Procédé selon l'une des revendications précédentes, **caractérisé en ce que** les machines (3) de l'ensemble (2) coopèrent les unes avec les autres à la manière d'une machine virtuelle (7), en échangeant des données de processus de travail, notamment géoréférencées, de préférence que ces données de processus de travail comportent des conditions de végétation et/ou des données de culture et/ou des données de qualité et de rendement actuelles des machines de l'ensemble et/ou des modèles de processus.

8. Procédé selon l'une des revendications précédentes, **caractérisé en ce qu'**avant le début de l'exécution du processus de travail agricole, un sous-programme de prétraitement est exécuté, notamment de façon externe à l'ensemble (2), sur un ordinateur backend, de préférence que les facteurs de correction sont déterminés dans le sous-programme de prétraitement, et/ou que le ralliement des points nodaux (9) est planifié dans le sous-programme de prétraitement, et/ou que les paramètres de machine optimisés sont générés sur la base d'un modèle de la machine virtuelle (7) et que le modèle est établi ou paramétré dans le sous-programme de prétraitement.

9. Procédé selon la revendication 8, **caractérisé en ce que** pendant l'exécution du processus de travail agricole, les facteurs de correction sont adaptés en continu et/ou de façon cyclique et/ou en fonction d'un événement, sur la base des données de capteurs, notamment virtuelles, de préférence que les facteurs de correction servent à déduire s'il existe un besoin de maintenance d'une machine (3).

10. Procédé selon l'une des revendications 8 et 9, **caractérisé en ce que** les facteurs de correction sont déterminés sur la base d'informations de référence collectées de façon externe aux machines (3) de l'ensemble (2).

11. Procédé selon l'une des revendications 2 à 10, **caractérisé en ce que** des capteurs (11) des machines (3) de l'ensemble (2) sont ajustés et/ou étalonnés sur la base des données de capteurs d'autres machines (3) de l'ensemble (2).

12. Procédé selon l'une des revendications précédentes, **caractérisé en ce que**, en cas de défaillance des capteurs d'une machines (3) de l'ensemble (2), cette machine (3) utilise des données de capteurs d'au moins une autre machine (3 de l'ensemble (2) ou les données de capteurs virtuelles, afin de compenser, au moins en partie, la défaillance des capteurs.

13. Procédé selon l'une des revendications précédentes, **caractérisé en ce que** lors de l'exécution du processus de travail agricole et/ou dans le sous-programme de synchronisation et/ou dans le sous-programme de prétraitement, des données d'un autre ensemble (2) similaire sont utilisées, de préférence que des facteurs de correction de l'ensemble (2) similaire sont utilisés, en outre de préférence que les facteurs de correction de l'ensemble (2) similaire sont adaptés dans le sous-programme de prétraitement et/ou le sous-programme de synchronisation.

14. Procédé selon l'une des revendications précédentes, **caractérisé en ce qu'**une contribution d'une machine (3) à la machine virtuelle (7) peut être mise en pause par un utilisateur.

15. Procédé selon l'une des revendications précédentes, **caractérisé en ce que** l'ensemble (2) présente une assurance de qualité qui peut exclure et/ou mettre en pause des contributions d'une machine (3) de l'ensemble (2) à la machine virtuelle (7), de préférence que l'assurance de qualité évalue les contributions d'une machine (3) de l'ensemble (2) à la machine virtuelle (7) d'après des critères de qualité et les exclut ou les met en pause sur la base des critères de qualité, en outre de préférence que les critères de qualité concernent l'équipement de la machine (3) de l'ensemble (2) et/ou des conditions de champ locales de la machine (3) de l'ensemble (2).

16. Procédé selon l'une des revendications précédentes, **caractérisé en ce qu'**un utilisateur peut commander et/ou vérifier l'exécution du processus agricole, notamment au moyen d'un appareil mobile.

17. Procédé selon l'une des revendications précédentes, **caractérisé en ce que** les machines (3) de l'ensemble (2) sont des machines agricoles (3) du même type, notamment du type moissonneuse-batteuse ou ensileuse, et présentent par conséquent des organes de travail (4) similaires et coopèrent en tant que machine virtuelle (7) de ce type, ou **en ce que** les machines (3) de l'ensemble (2) comprennent au moins une machine (3) d'un autre type et exécutent ensemble le même processus de travail agricole, notamment un processus de récolte du champ (1).

18. Procédé selon l'une des revendications précédentes, **caractérisé en ce que** les machines (3) de l'ensemble (2) coopèrent avec au moins un autre ensemble (2) de machines agricoles (3) qui travaillent également ensemble à la manière d'une machine virtuelle (7), de préférence que les ensembles (2) coopèrent à la manière d'une machine virtuelle (7) supplémentaire, en tant qu'ensemble virtuel de machines virtuelles (7).
